# FASCICULE DE BREVET EUROPEEN

(11) **EP 3 468 359 B1**
(45) Date de publication et mention de la délivrance du brevet: **05.03.2025**
(21) Numéro de dépôt: 17783902.4
(22) Date de dépôt: 09.06.2017
(51) Int. Cl.: A01L 11/00

(54) **PROCÉDÉ DE FABRICATION D'UN FER À CHEVAL**
VERFAHREN ZUR HERSTELLUNG EINES HUFEISENS
METHOD FOR MANUFACTURING A HORSE SHOE

(30) Priorité: 10.06.2016 FR 1655386
(43) Date de publication de la demande: 17.04.2019
(73) Titulaire: Value Feet, 33610 Canejan (FR)
(72) Inventeur: ROORYCK, Maxime, 33610 Canejan (FR); ROORYCK, Thibaut, 33610 Canejan (FR)
(74) Mandataire: Plasseraud IP
(86) Numéro de dépôt international: PCT/FR2017/051463
(87) Numéro de publication internationale: WO 2017/212186

(56) Documents cités:
- WO-A1-92/03770
- DE-A1- 102014 001 508

## Description

### ARRIERE-PLAN DE L'INVENTION

### Domaine de l'invention

La présente invention concerne un procédé de définition des paramètres d'un fer à cheval sur mesure pour sa fabrication, et un procédé de fabrication d'un fer à cheval sur mesure, ce fer étant destiné à épouser la forme d'un sabot d'un cheval spécifique pour lequel il a été réalisé.

Elle vise également un programme d'ordinateur pour la mise en œuvre des étapes de ce procédé lorsque ce programme est exécuté sur un ordinateur, ce dernier pouvant faire partie d'une station de travail mobile.

### Arrière-plan technologique

Afin de préserver les qualités du pied d'un cheval, il est connu de protéger celui-ci en posant sur le sabot correspondant un fer à cheval.

Si autrefois, le façonnage d'un fer à cheval relevait exclusivement de la compétence du maréchal-ferrant, les fers ordinaires sont désormais fabriqués en usine.

Bien que les fers ainsi obtenus présentent une forme sensiblement uniforme et plane, ils autorisent, lors du ferrage d'un cheval, un gain de temps non négligeable pour le maréchal-ferrant.

Afin d'alléger les fers à cheval tout en assurant une tenue adéquate, les fers fabriqués en usine sont, pour un usage sportif, typiquement réalisés en aluminium, et non plus en acier.

Toutefois, de tels fers étant alors difficilement façonnables, le maréchal-ferrant doit choisir un fer dont la forme et les dimensions sont les plus proches de la ferrure adaptée au sabot à ferrer.

La mise en œuvre d'un tel fer peut dès lors causer une certaine gêne au cheval, notamment lorsque qu'un pied de ce dernier présente des fragilités, une pathologie naviculaire par exemple.

Pour assurer un confort plus important au cheval, notamment en prenant en compte la morphologie de chaque pied mais également d'éventuelles pathologies associées, des procédés de fabrication de fer sur mesure ont été récemment proposés. Voir par exemple DE 102014001508 A1 et WO 92/03770 A1.

Ces procédés visent à réaliser des ferrures orthopédiques non plus pour une utilisation a posteriori, mais à titre préventif.

On connaît, par exemple, des ferrures à branches réunies, c'est-à-dire fermées à l'arrière, pour augmenter la surface portante, diminuer la pénétration du fer dans le sol et permettre ainsi la prévention d'une déchirure.

Par ailleurs, de nombreux développements ont été également réalisés pour allier dans un même produit, performance, confort et protection du pied ferré.

On connaît ainsi des procédés de fabrication de fers composites, lesquels comportent une armature métallique assemblée à une ou plusieurs parties réalisées dans un matériau amortissant.

La structure de ces fers assure non seulement un allégement significatif de la ferrure mais permet aussi un amortissement des chocs.

Toutefois, la réalisation de tels fers sur mesure résulte généralement d'un processus long et pénible pour l'opérateur.

En effet, ce dernier est typiquement amené à collecter manuellement un jeu de paramètres pour chaque ferrure à fabriquer, puis de programmer une machine permettant d'usiner une pièce métallique aux dimensions requises pour obtenir une ébauche de ferrure correspondante et de travailler la pièce ainsi obtenue pour y ajouter les éléments de finition nécessaires (pinçons, échancrures, ...).

De tels fers sur mesure sont donc longs à réaliser et par conséquent, onéreux.

### Objet de l'invention

La présente invention vise à pallier les inconvénients de l'art antérieur et à répondre aux contraintes ci-dessus énoncées en proposant un procédé de définition des paramètres d'un fer à cheval sur mesure pour sa fabrication, et un procédé de fabrication d'un fer à cheval sur mesure, simple dans sa conception et dans son mode opératoire, permettant à un opérateur de définir de manière très rapide, aisée et fiable, les paramètres d'un fer à cheval sur mesure pour sa fabrication.

Un autre objet de la présente invention est un tel procédé permettant de guider l'opérateur lors de chacune des étapes de définition du fer à cheval sur mesure.

Encore un objet de la présente invention est un tel procédé mettant à disposition de l'opérateur plusieurs sources d'informations complémentaires sur un cheval spécifique à ferrer, par la restitution de chacune d'elles au travers d'un espace d'affichage propre sur l'écran d'un terminal de sorte que la détermination par l'opérateur des paramètres définitifs du fer à cheval sur mesure soit la plus précise et aisée possible.

La présente invention vise également un programme d'ordinateur permettant de mettre en œuvre les étapes de ce procédé lorsqu'il est exécuté sur un ordinateur.

### BREVE DESCRIPTION DE L'INVENTION

A cet effet, l'invention concerne un procédé de définition des paramètres d'un fer à cheval sur mesure pour sa fabrication, ledit fer étant destiné à épouser la forme d'un sabot d'un cheval spécifique pour lequel il a été réalisé.

Un procédé de définition des paramètres d'un fer à cheval sur mesure pour
sa fabrication selon l'invention est défini dans la revendication 1. Un procédé de fabrication d'un fer à cheval sur mesure selon l'invention est défini dans la revendication 11. Un programme d'ordinateur selon l'invention est défini dans la revendication 13. Un support d'enregistrement selon l'invention est défini dans la revendication 14. Une station de travail selon l'invention est définie dans la revendication 15. Des modes de réalisation avantageux de l'invention sont définis dans les revendications dépendantes.

Selon l'invention définie dans la revendication 1, ayant obtenu une image numérique d'au moins une partie d'un sabot à ferrer, on réalise les étapes suivantes :
a) superposer une image d'un fer à cheval et ladite image numérique pour insérer l'image dudit fer à cheval dans ladite image numérique,
b) adapter les dimensions et/ou la forme dudit fer à cheval dans ladite image audit sabot à ferrer, et
c) ajuster les dimensions et/ou la forme dudit fer à cheval dans ladite image en tenant compte au moins de paramètres physiques du cheval et/ou de l'activité envisagée pour ce cheval et de l'existence éventuelle d'au moins une pathologie telle qu'une zone d'inflammation et/ou d'au moins une zone de réduction de la circulation sanguine, du pied du cheval dont le sabot est destiné à recevoir ledit fer.

De manière avantageuse, à l'étape a), l'image de ce fer à cheval est sélectionnée dans une bibliothèque de données.

L'image numérique d'au moins une partie du sabot à ferrer est avantageusement une image bidimensionnelle ou tridimensionnelle d'au moins une partie du dessous du pied dont le sabot est à ferrer.

De préférence, à l'étape a), la superposition des deux images est réalisée de sorte que l'image affichée sur l'écran d'un terminal montre le seul fer à cheval superposé sur le dessous du pied du sabot à ferrer. Par exemple, cette superposition est obtenue par un procédé de superposition par fondu.

A titre d'exemple, des paramètres physiques du cheval peuvent être sa race et son âge.

De préférence, le fer à cheval comporte une partie métallique. Ce fer à cheval peut alors être constitué de cette seule partie métallique ou être un fer composite. Dans ce dernier cas, il comporte, en plus de cette partie métallique, une ou plusieurs parties résilientes non métalliques.

Alternativement, le fer à cheval sur mesure est un fer non métallique, par exemple une ferrure en matière plastique.

Lorsque le fer à cheval comporte une partie métallique et une ou plusieurs parties non métalliques, cette partie métallique peut être noyée dans une matière plastique ou au contraire être apparente ou encore en partie visible, dans le fer à cheval final. Dans ce dernier cas, non seulement, cette ou ces parties non métalliques peuvent faire l'objet d'une coloration mais également la partie métallique afin de conférer un aspect esthétique particulier au fer à cheval.

Ce fer à cheval lorsqu'il est non métallique ou ladite partie, ou au moins une des parties, en matière non métallique du fer à cheval lorsque ce dernier comporte une structure sandwich dont au moins une partie est métallique, peut être chargée de manière uniforme en particules allégeant celle-ci.

Il peut s'agir à titre purement illustratif de particules de liège. Il peut encore s'agir de fibres pour améliorer les performances mécaniques du fer et/ou de particules résistantes à l'usure telles que des particules métalliques ou des particules de céramique.

De manière classique, l'assemblage de la ou des parties non métalliques et de la partie métallique pour former la ferrure composite est, par exemple, obtenue par collage.

Cette partie non métallique est par exemple réalisée dans une matière plastique telle qu'un polyuréthane.

Le fer à cheval sur mesure peut encore être un fer composite à matrice métallique comportant des particules de céramique. A titre purement illustratif, il peut s'agir d'un fer à cheval à matrice d'aluminium dans laquelle sont dispersées des particules de céramique. Encore à titre d'exemple, la surface externe de ce fer destinée à venir en contact avec le sol peut comporter une concentration de particules de céramique pour réduire l'usure du fer. De manière avantageuse, ces dernières présentent une taille moyenne inférieure à environs 20 µm.

Dans différents modes de réalisation particuliers de ce procédé, chacun ayant ses avantages particuliers et susceptibles de nombreuses combinaisons techniques possibles:
- cette image numérique est obtenue dans le domaine visible ou infrarouge ou par rayonnement d'ondes ou de particules électromagnétiques.

A titre purement illustratif, cette image numérique peut être obtenue au moyen d'un capteur d'image tel qu'un dispositif à couplage de charge (CCD), un capteur CMOS ou un dispositif à injection de charge (CID), un dispositif d'imagerie par infrarouge, par rayons X, par échographie ou par imagerie par résonance magnétique (IRM) ou encore par tomographie par émission de positrons.

Cette image peut encore se présenter sous la forme d'un nuage de points bidimensionnel ou tridimensionnel.

Dans un premier mode de réalisation, on visualise et on acquiert une image numérique d'au moins une partie dudit sabot à ferrer, une partie du dessous du pied dont le sabot est à ferrer étant au moins en partie visible. Alternativement, on réalise un tracé d'au moins une partie du dessous du pied dont le sabot est à ferrer et on acquiert une image numérique de ce tracé ainsi réalisé, par exemple au moyen d'un capteur d'image.

Alternativement, et préalablement à l'étape a), on obtient cette image numérique par superposition d'au moins deux images numériques distinctes de manière à assister l'utilisateur dans la définition du fer à cheval. L'image numérique ainsi obtenue présente une combinaison d'informations pouvant s'avérer utile à l'utilisateur pour déterminer les paramètres du fer à cheval sur mesure.

Par exemple, il peut s'agir d'une superposition par fondu de deux images numériques d'une même partie du pied du cheval à ferrer, une première de ces images numériques étant obtenue dans le visible et l'autre étant obtenue dans le domaine infrarouge. On peut ainsi superposer un cliché obtenu par un capteur d'image et une image thermique obtenue par un détecteur infrarouge.
- au moins une deuxième image numérique est affichée séparément de ladite image numérique d'au moins une partie d'un sabot à ferrer, ladite deuxième image numérique étant une image d'une autre partie anatomique dudit cheval pour assister l'utilisateur dans la définition dudit fer à cheval.

Le logiciel tel qu'un logiciel de traitement d'images, permettant de mettre en œuvre les étapes de ce procédé étant installé sur une station de travail comportant un écran d'affichage, on peut afficher lesdites images ainsi superposées à l'étape a) dans une fenêtre, ou espace d'affichage, principale et cette deuxième image numérique dans une fenêtre secondaire.

A titre purement illustratif, cette deuxième image numérique peut être une image d'au moins une partie de la jambe correspondante au pied à ferrer, laquelle peut fournir par exemple des informations complémentaires sur le positionnement d'une zone d'inflammation et/ou d'au moins une zone de réduction de la circulation sanguine, notamment dans une troisième dimension, tel que le long d'un axe z parallèle ou sensiblement parallèle à la jambe du cheval.

De préférence, au moins une de ces images numériques est une partie d'une trame vidéo figée. Dans cette vidéo réalisée par exemple dans le domaine visible ou infrarouge, le cheval peut être à l'arrêt ou en mouvement. De manière avantageuse, il peut être également possible pour l'opérateur de changer cette image numérique en réalisant une avance ou un recul dans le défilement de la vidéo.

La visualisation d'une vidéo d'un cheval en mouvement est susceptible d'apporter des informations complémentaires importantes en vue de l'établissement d'un fer sur mesure.
- préalablement à ou après l'étape c), une transmission d'au moins l'image résultant de la superposition desdites images à l'étape a), cette dernière ayant été éventuellement modifiée à l'étape b) et/ou à l'étape c), est réalisée au moyen d'un réseau internet ou d'un réseau de communication.

La transmission de cette image ou de ces images à un opérateur distant permet à ce dernier d'accéder aux informations utiles pour la définition du fer à cheval sur mesure. Cet opérateur distant peut dès lors à distance adresser ses recommandations quant aux paramètres du fer sur mesure à réaliser pour ce pied spécifique ou encore approuver ou modifier les paramètres déterminés par l'utilisateur traitant directement les images affichées au moyen d'un logiciel adapté. Cette transmission peut mettre en œuvre un réseau d'accès cellulaire comportant un ensemble de points d'accès cellulaires auprès desquels un terminal utilisé pour transmettre cette ou ces images se connecte. Le réseau d'accès cellulaire peut être de plusieurs types (2G, 3G, 4G), chaque type de réseau étant accessible selon plusieurs technologies d'accès cellulaires (2G : EDGE, GPRS, 3G : UMTS, HSDPA, HSUPA, HSPA, HSPA+, 4G : LTE). Alternativement, il peut s'agir d'un réseau internet par exemple un réseau comportant des points d'accès non cellulaires sans fil tel qu'un réseau WLAN, par exemple Wi-Fi ou WiMAX ou encore d'un réseau Li-Fi. A titre purement illustratif, simultanément à la transmission de l'image résultant de la superposition des images à l'étape a), cette dernière ayant été éventuellement modifiée à l'étape b), on peut transmettre une image numérique d'une autre partie anatomique du cheval.
- une étape supplémentaire est réalisée, cette étape consistant à déterminer une ligne de référence dudit fer à cheval à partir de laquelle sera déterminée la position d'au moins un élément de finition dudit fer à cheval.

De préférence, on choisit cette ligne de référence parmi les rives externe et interne du fer à cheval sélectionné.

De manière avantageuse, ayant déterminé le pourtour extérieur de la paroi du sabot à ferrer, on ajuste les dimensions et/ou la forme dudit fer à cheval, à l'étape b), de sorte que la rive externe dudit fer à cheval sélectionné soit confondue ou sensiblement confondue avec ledit pourtour.

Cet ajustement est avantageusement réalisé de manière automatique par un logiciel de traitement d'images, ledit pourtour extérieur de la paroi du sabot étant déterminé par exemple par contraste sur l'image numérisée.

De manière avantageuse, et afin de faciliter le travail de l'utilisateur, au moins ladite ligne de référence est segmentée par des points de contrôle, chacun de ces points de contrôle étant affiché pour autoriser une modification locale de la forme de ladite ligne correspondante. Ces points de contrôle qui présentent un pas régulier ou non, autorisent un ajustement précis de la forme de ce fer à cheval.

De préférence, cette segmentation de la ligne de référence est réalisée lors d'une étape de segmentation, laquelle inclut la détermination préalable du nombre de points de contrôle et éventuellement du pas entre chaque point de contrôle ainsi affiché.
- ayant déterminé une ligne de référence dudit fer à cheval, on détermine un centre théorique du sabot à ferrer et on ajoute un ou plusieurs éléments de finition sur ledit fer à cheval sélectionné, la position de chaque élément de finition étant calculée par rapport à ladite ligne de référence et ledit centre ainsi déterminés.

Ce pré-positionnement d'un ou plusieurs éléments de finition peut avantageusement être réalisé automatiquement par un logiciel de traitement d'images à partir de données préalablement enregistrées. Par exemple, à partir d'un ensemble de données enregistrées relatives à un même cheval, on détermine le nombre moyen, le type prépondérant d'éléments de finition ajoutés ainsi que leur positionnement dans des fers antérieurement réalisés. Alternativement, on peut afficher lesdits paramètres proposés avec une demande de validation ou de modification par l'utilisateur. L'utilisateur n'a alors plus qu'à valider ces éléments de finition proposés ou au contraire, modifier leur type, ajuster leur position, adapter leur taille avant validation définitive des paramètres du fer à cheval.

A titre purement illustratif, chaque élément de finition est choisi dans le groupe comprenant un pinçon, une ajusture, une étampure, une échancrure, une contre-perçure, un rolling, une mortaise, une plaque d'amortissement dont la forme de son pourtour et les dimensions sont identiques ou sensiblement identiques à celles du fer à cheval défini suite à l'étape c).

A titre purement illustratif, cette plaque d'amortissement peut être réalisée en dans un matériau polymère tel qu'un élastomère, en liège ou en cuir.
- on ajuste le positionnement, les dimensions et/ou la forme d'au moins un desdits éléments de finition ainsi ajouté.

Avantageusement, ledit fer à cheval comportant plusieurs unités d'un même élément de finition, chacune d'entre elles est modifiée simultanément à la modification d'une d'entre elles par l'utilisateur.
- on réalise les étapes supplémentaires suivantes :
   - transmission des données définitives du fer à cheval ainsi sélectionné à un système de CFAO,
   - génération dans le système de CFAO d'un fer à cheval en trois dimensions correspondant au fer à cheval sélectionné; ledit fer à cheval ainsi généré étant adapté et ajusté en trois dimensions dans le système de CFAO en fonction de la taille et/ou de la forme déterminée, ledit fer à cheval comportant éventuellement au moins un élément de finition, ledit fer à cheval ainsi généré définissant un ensemble de paramètres dudit fer à cheval en trois dimensions dans le système de CFAO, et
   - usinage d'un fer à cheval à partir d'un bloc de matière en fonction de l'ensemble de paramètres du fer à cheval en trois dimensions ainsi généré dans le système de CFAO pour ledit fer sélectionné ou impression tridimensionnelle dudit fer à partir de l'ensemble de paramètres du fer à cheval en trois dimensions ainsi généré dans le système de CFAO pour ledit fer sélectionné.

De manière avantageuse, on génère avant l'étape d'usinage, un parcours outil « G-Code ».

L'impression tridimensionnelle peut avantageusement être réalisée sur site, directement après détermination des paramètres définitifs de la ferrure sur mesure (étape c) au moyen d'une imprimante 3D embarquée ou mobile, ou ultérieurement, sur un site de production desdits fers à cheval sur mesure.
- à l'étape a), l'image dudit fer à cheval étant choisie dans une bibliothèque de données, ladite bibliothèque de données comporte également un ensemble de données comprenant au moins un identifiant dudit cheval, un identifiant dudit sabot à ferrer et des paramètres définitifs d'un ou plusieurs fers à cheval réalisés antérieurement pour ledit sabot à ferrer. On génère après identification dudit cheval et dudit sabot à ferrer, un sous-ensemble de paramètres déterminant la forme et/ou le nombre d'au moins certains éléments de finition pour ledit fer à cheval, lesdits paramètres étant déterminés à partir des paramètres correspondants choisis pour des fers sur mesure réalisés antérieurement,
- ledit fer à cheval étant constitué de ou comportant une partie métallique, on produit ladite partie métallique par un procédé de création tridimensionnelle de type fusion laser.

Alternativement, cette partie métallique peut être obtenue par découpe d'une plaque métallique, laquelle peut avoir été préalablement usinée avant découpe pour définir les trous, les étampures associées et/ou le biseau de l'ajusture, par exemple.

De manière plus générale, le fer à cheval comportant une ou plusieurs couches, au moins une de ces couches est obtenue par un procédé de fabrication par impression tridimensionnelle.

La couche ainsi obtenue peut être métallique (Aluminium, fer, titane, ...) ou en polymère. Par exemple, elle peut être obtenue à partir d'une poudre métallique agglomérable, encore appelée « poudre frittable ».
- on marque préalablement la surface externe de ladite partie métallique d'un ou plusieurs identifiants pour autoriser une identification de celle-ci.

De manière générale, et notamment lors d'un traitement en lot des parties métalliques, il est nécessaire de pouvoir identifier la partie métallique qui a été élaborée sur mesure pour le pied d'un cheval spécifique. Le ou les identifiants qui sont réalisés sur la partie métallique doivent pouvoir rester visibles après traitement du fer, particulièrement après finition de sa couleur.

De préférence, ce marquage est réalisé par enlèvement de matière à la surface externe de ladite partie métallique. De manière avantageuse, cet enlèvement de matière est obtenu par traitement laser.

Alternativement, le marquage pourrait être réalisé par dépôt de matière sur la surface externe de ladite partie métallique. De préférence, un tel dépôt de matière serait alors réalisé après polissage de la partie métallique.

A titre purement illustratif, ce marquage peut comporter une portion répétée pour chacune des parties métalliques produites pour un cheval spécifique et une portion permettant d'associer une de ces parties métalliques avec le pied de ce cheval pour laquelle elle est destinée.

La présente invention concerne également un programme d'ordinateur comprenant des instructions adaptées à la mise en œuvre de chacune des étapes du procédé tel que décrit précédemment, lorsque ledit programme est exécuté sur un ordinateur.

Cet ordinateur peut être une station de travail fixe ou mobile, ou encore un terminal mobile tel qu'un téléphone portable, par exemple un smartphone, ou une tablette tactile portable.

La présente invention concerne aussi un support d'enregistrement sur lequel est stocké le programme d'ordinateur tel que décrit précédemment.

La présente invention concerne encore une station de travail comprenant une interface utilisateur graphique, un processeur et une unité de stockage informatique contenant une bibliothèque de données comprenant des enregistrements numérisés appartenant à un cheval à ferrer ainsi que des données sur différents fers à cheval, par exemple type, forme, ... ; et leurs éléments de finition tels que pinçon, une étampure, une échancrure, une contre-perçure, un rolling, une mortaise, ...

Selon l'invention, lesdits enregistrements numérisés comprennent une ou plusieurs images d'un sabot à ferrer et ladite station de travail comprend un ensemble d'instructions logicielles constituant des outils d'interface graphique/utilisateur grâce auxquelles cet utilisateur peut générer un fer à cheval sur mesure pour ledit sabot à ferrer, lesdites instructions logicielles appartenant audit programme d'ordinateur tel que décrit précédemment.

De préférence, cette station de travail comporte un châssis équipé de moyens de mobilité tels que des roues ou roulettes et éventuellement d'une source d'alimentation en énergie autonome pour alimenter en énergie les différents dispositifs ou appareils électriques de ladite station.

De manière avantageuse, cette station de travail comprend un ou plusieurs éléments choisis dans le groupe comprenant un capteur d'image, un détecteur infrarouge, un dispositif d'imagerie par rayons X, un dispositif d'échographie, un émetteur-récepteur pour transmettre et recevoir des données stockées sur ladite unité de stockage, un dispositif de communication sans fil (bluetooth, NFC, Zigbee, RFID, GSM, 2G, 3G, 4G, des systèmes de communication internet incluant Wi-Fi, Wi-Max, Li-Fi, ...) pour transmettre et recevoir des données ainsi qu'une ou plusieurs interfaces USB.

### BREVE DESCRIPTION DES DESSINS

D'autres avantages, buts et caractéristiques particulières de la présente invention ressortiront de la description qui va suivre, faite, dans un but explicatif et nullement limitatif, en regard des dessins annexés, dans lesquels :
- la Figure 1 représente schématiquement une étape préalable de transmission d'une image numérique du dessous du pied d'un cheval à ferrer acquise au moyen d'un capteur d'image, à une station de travail pour définir les paramètres définitifs d'un fer sur mesure pour le sabot d'un cheval spécifique à ferrer selon un mode de réalisation particulier de la présente invention ;
- la Figure 2 est une vue schématique de l'affichage à l'écran de la station de travail de la Figure 1, dans lequel une image d'un fer est superposée par transparence à l'image acquise au moyen dudit capteur d'image ;
- la Figure 3 est une vue schématique montrant le calcul réalisé par un programme d'ordinateur permettant de réaliser les étapes du procédé de fabrication d'un fer sur mesure, pour le positionnement d'un pinçon sur la ligne de rive externe du fer ;
- la Figure 4 montre un fer à cheval sur mesure obtenu par le procédé de la présente invention ;

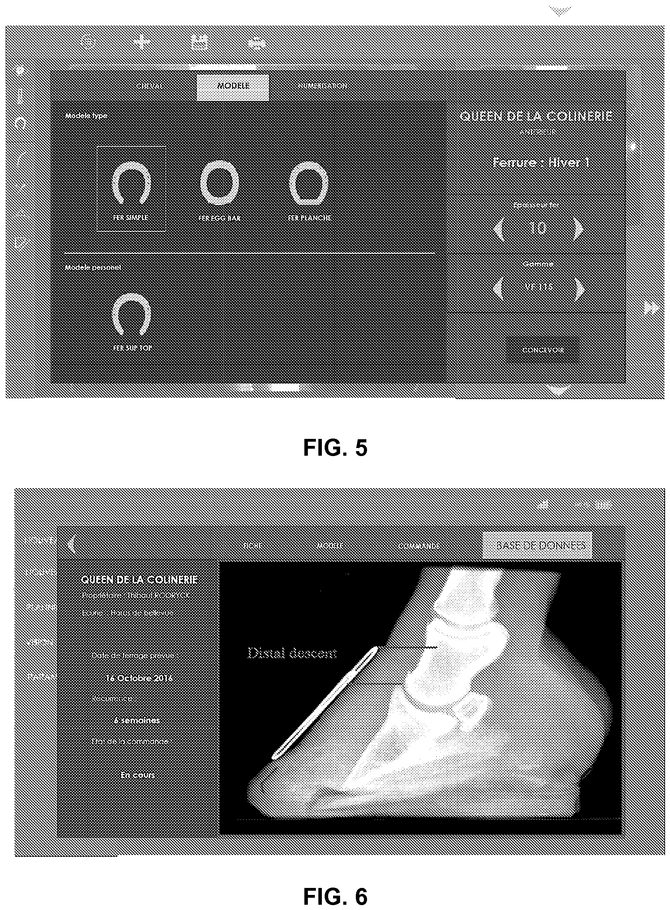

- la Figure 5 montre une étape d'un procédé de fabrication d'un fer à cheval selon un autre mode de réalisation de la présente invention, étape selon laquelle on sélectionne une ébauche de fer à cheval ;
- la Figure 6 montre une autre étape du procédé de fabrication d'un fer à cheval illustré à la Fig. 5, dans laquelle on visualise une imagerie du pied à ferrer pour déterminer une éventuelle correction à apporter audit fer à cheval;

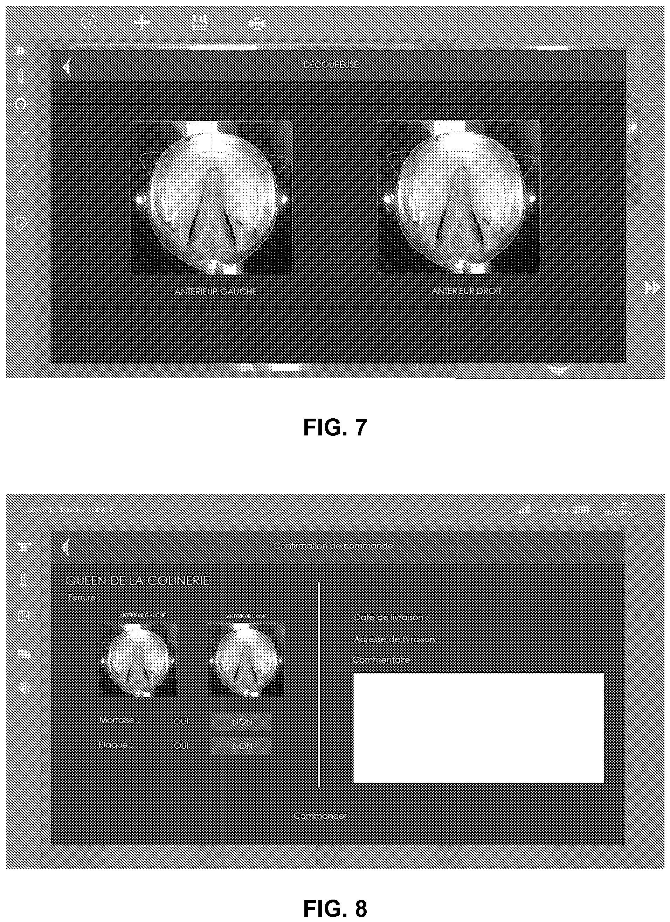

- la Figure 7 montre une autre étape du procédé de fabrication d'un fer à cheval illustré à la Fig. 5, dans laquelle on ajoute des pinçons audit fer à cheval sur mesure en cours de réalisation;
- la Figure 8 montre une autre étape du procédé de fabrication d'un fer à cheval illustré à la Fig. 5, dans laquelle on détermine la présence ou non d'éléments de finition (mortaises, ...);

### DESCRIPTION DETAILLEE DE MODE DE REALISATION DE L'INVENTION

Tout d'abord, on note que les figures ne sont pas à l'échelle.

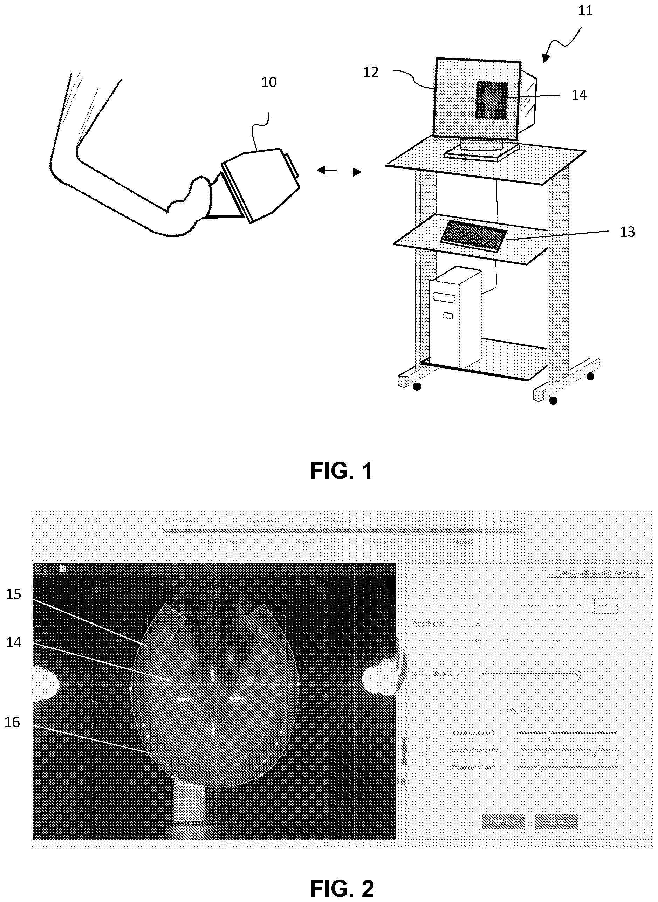

Les Figures 1 et 2 représentent schématiquement un ensemble opérationnel pour la mise en œuvre d'un procédé de fabrication d'un fer cheval sur mesure selon un mode de réalisation particulier de la présente invention.

Cet ensemble opérationnel comporte un capteur 10 d'image, une station 11 de travail mobile ainsi qu'une imprimante 3D (non représentée).

Le capteur 10 d'image permet l'acquisition d'une image numérique du sabot à ferrer, cette image montrant le dessous du pied du cheval, préalablement à la détermination des paramètres du fer sur mesure.

Ce capteur 10 d'image comporte une matrice bidimensionnelle de pixels pour transformer les informations optiques acquises par ce capteur en signaux électriques, lesquels sont ensuite reçus par et stockés sur une unité de stockage (non représentée) de la dite station 11 de travail.

A titre d'exemple, ces données peuvent être transférées depuis le capteur 10 d'image vers la station 11 de travail via une liaison filaire, via des moyens de transmission de données par signaux de communication sans fil à courte portée (Bluetooth, NFC ...) ou encore via un réseau internet tel qu'un réseau Wi-fi sur lequel le capteur 10 d'image est connecté. Dans ce dernier cas, ce capteur 10 d'image peut également être contrôlé à distance, directement depuis le terminal équipant la station 11 de travail.

L'image numérique du dessous du pied à ferrer ainsi acquise est ensuite affichée dans un espace d'affichage sur un écran 12 de ce terminal. Ce terminal comporte également un clavier 13 qui peut être un clavier à écran tactile.

L'opérateur superpose à cette première image 14 numérique, et au moyen d'un logiciel adapté, une image d'une ébauche 15 d'un fer à cheval dont l'on souhaite adapter les dimensions et/ou ajuster la forme de manière à ce qu'il épouse la forme du sabot pour lequel ce fer sur mesure est réalisé tout en prenant en compte certains critères tels que des paramètres physiques du cheval et/ou l'activité envisagée pour ce cheval et de l'existence éventuelle de pathologie telle que d'au moins une zone d'inflammation et/ou d'au moins une zone de réduction de la circulation sanguine du pied du cheval dont le sabot est destiné à recevoir le fer sur mesure en cours d'élaboration.

Comme le montre la Figure 2, cette ébauche 15 de fer se présente ici sous la forme d'une bande pleine ayant sensiblement une forme de U. Bien entendu, et en fonction du cheval spécifique pour lequel cette ferrure est réalisée, cette ébauche 15 pourrait être plus complexe et présenter une forme déjà prédéfinie.

De même, l'ébauche 15 de fer à cheval est introduite dans l'image du dessous du pied de sorte que cette dernière reste largement visible en arrière-plan pour faciliter le travail de l'opérateur. En d'autres termes, la superposition des deux images est réalisée avec un effet de transparence. Bien entendu, l'opérateur pourrait décider que l'ébauche 15 de fer apparaisse de manière non transparente, c'est-à-dire en masquant en partie l'image numérique du dessous du pied, entraînant néanmoins de fait une perte de certaines informations.

Puis l'opérateur ajuste ici les dimensions de l'ébauche 15 de fer à cheval dans cette image au sabot à ferrer de sorte que la ligne courbe de la rive 16 externe épouse la paroi externe du sabot. Un tel ajustement étant réalisé automatiquement par le logiciel de traitement, l'opérateur conserve la possibilité de modifier cet ajustement en fonction de ses besoins et attentes.

L'opérateur réalise ensuite une adaptation des dimensions et un ajustement de la forme de l'ébauche 15 de fer à cheval dans l'image en tenant compte notamment de paramètres physiques du cheval, de l'activité envisagée pour ce cheval, une fois ferrée, et de l'existence éventuelle d'au moins une zone d'inflammation et/ou d'au moins une zone de réduction de la circulation sanguine du pied du cheval dont le sabot est destiné à recevoir ledit fer.

L'ensemble de ces modifications apportées à l'ébauche 15 de fer pour l'établissement d'un fer sur mesure permet d'assurer un confort plus important au cheval, notamment en prenant en compte la morphologie du pied dont le sabot est à ferrer mais également d'éventuelles pathologies associées.

Lorsque la forme et les dimensions du fer sur mesure sont validées, l'opérateur peut ajouter un ou plusieurs éléments 17 de finition choisis dans le groupe donné à titre purement illustratif et non limitatif, comprenant pinçon, étampure, échancrure, contre-perçure, rolling, mortaise, ...

Ces opérations sont donc ici réalisées par modification d'une représentation, ou image, d'une ébauche d'un fer à cheval que l'opérateur visualise à l'écran en superposition d'une image numérique du dessous du pied à ferrer. Il en résulte une grande simplicité et rapidité de travail pour l'opérateur afin de déterminer les paramètres définitifs d'un fer sur mesure pour ferrer un sabot d'un cheval.

Lorsque les différents paramètres du fer à cheval sur mesure ont été définis, les données correspondantes sont avantageusement enregistrées en vue de l'usinage du fer à cheval ou de son impression tridimensionnelle.

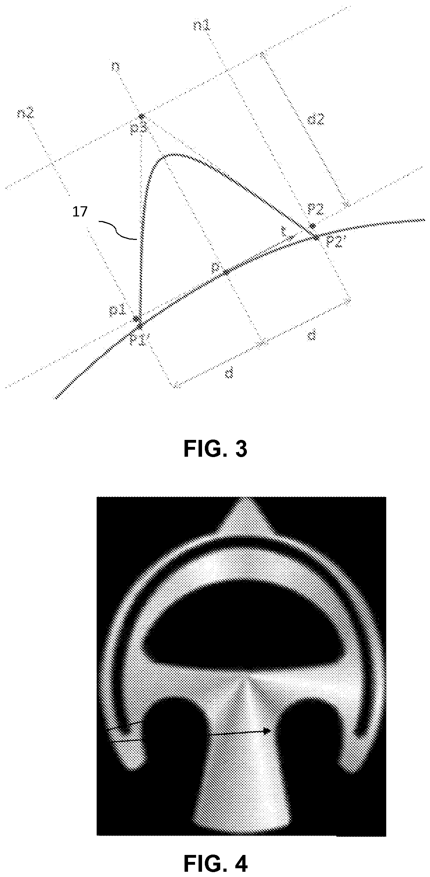

Comme représenté sur la Fig. 3, l'ajout d'éléments de finition, ici un pinçon 17, lors de l'élaboration du fer sur mesure peut nécessiter un traitement particulier par le logiciel afin d'autoriser un tel ajout. Ainsi, ce logiciel de traitement évite avantageusement une reprise éventuelle du fer sur mesure par le maréchal-ferrant pour introduire un ou plusieurs éléments 17 de finition qui n'auraient pas pu être ajoutés lors la définition du fer sur mesure. Le temps de fabrication et le coût associé du fer à cheval sur mesure s'en trouvent significativement réduits.

Chaque pinçon 17 est placé sur le fer en cours d'édition par l'opérateur au moyen du positionnement d'un point P sur la rive 16 externe de ce fer. Une continuité visuelle entre la rive 16 externe du fer qui est courbe et la base du pinçon 17 qui est une ligne droite, est avantageusement assurée par le logiciel de traitement.

Pour cela, plusieurs étapes de traitement sont réalisées par le programme d'ordinateur mis en œuvre pour réaliser les étapes du procédé de fabrication d'un fer sur mesure lorsqu'il est exécuté sur un ordinateur.

Tout d'abord, soit n1 et n2 les droites de vecteur directeur normal à la courbe en P et translatées le long de la tangente t à la courbe en P d'une distance d, préalablement déterminée.

Soit P1 et P2 les points d'intersections respectifs entre la droite n1 et la tangente t d'une part et la droite n2 et la tangente t d'autre part.

Soit P1' et P2' les points d'intersections, les plus proches de P1 et P2, entre la rive externe du fer à cheval et les droites n1 et n2. Enfin, soit P3 le point P translaté d'une distance d2 préalablement déterminée le long de sa normale.

L'affichage final du pinçon 17 est une courbe de Bézier cubique ayant :
* Pour point de départ :
   - le point P1, si la distance entre les points P1 et P1' est supérieure à une valeur seuil prédéfinie, ici 5 mm, ou si P1' n'existe pas,
   - le point P'1 sinon.
* le point P3 comme premier et deuxième point de contrôle,
* Pour point d'arrivée:
   - le point P2 si la distance entre les points P2 et P2' est supérieure à une valeur seuil prédéfinie, ici 5 mm, ou si le point P2' n'existe pas,
   - le point P2' sinon.

Si les points P1' et/ou P2' existe(nt) et ne sont pas utilisés alors les lignes P1P1' et/ou P2P2' sont tracées.

## Revendications

1. Procédé de définition des paramètres d'un fer à cheval sur mesure pour sa fabrication, **caractérisé en ce qu'**ayant obtenu une image numérique (14) d'au moins une partie d'un sabot à ferrer, on réalise les étapes suivantes :
a) superposer une image d'un fer (15) à cheval et ladite image numérique (14) pour insérer l'image dudit fer à cheval dans ladite image numérique (14),
b) adapter les dimensions et/ou la forme dudit fer à cheval dans ladite image audit sabot à ferrer, et
c) ajuster les dimensions et/ou la forme dudit fer à cheval dans ladite image en tenant compte au moins de paramètres physiques du cheval et/ou de l'activité envisagée pour ce cheval et de l'existence éventuelle d'au moins une pathologie telle qu'une zone d'inflammation et/ou d'au moins une zone de réduction de la circulation sanguine, du pied du cheval dont le sabot est destiné à recevoir ledit fer.

2. Procédé selon la revendication 1, **caractérisé en ce que** ladite image numérique (14) est obtenue dans le domaine visible ou infrarouge ou par rayonnement d'ondes ou de particules électromagnétiques.

3. Procédé selon la revendication 1, **caractérisé en ce que** préalablement à l'étape a), on obtient ladite image numérique (14) par superposition d'au moins deux images numériques de manière à assister l'utilisateur dans la définition dudit fer à cheval.

4. Procédé selon l'une quelconque des revendications 1 à 3, **caractérisé en ce qu'**au moins une deuxième image numérique (14) est affichée séparément de ladite image numérique (14) d'au moins une partie d'un sabot à ferrer, ladite deuxième image numérique (14) étant une image d'une autre partie anatomique dudit cheval pour assister l'utilisateur dans la définition dudit fer à cheval.

5. Procédé selon la revendication 4, **caractérisé en ce qu'**au moins une desdites images numériques est une partie d'une trame vidéo figée.

6. Procédé selon l'une quelconque des revendications 1 à 5, **caractérisé en ce que** préalablement à l'étape c), une transmission d'au moins l'image résultant de la superposition desdites images à l'étape a), est réalisée au moyen d'un réseau internet ou d'un réseau de communication.

7. Procédé selon l'une quelconque des revendications 1 à 6, **caractérisé en ce qu'**une étape supplémentaire est réalisée, ladite étape consistant à déterminer une ligne de référence dudit fer à cheval à partir de laquelle sera déterminée la position d'au moins un élément (17) de finition dudit fer à cheval.

8. Procédé selon la revendication 7, **caractérisé en ce qu'**on choisit ladite ligne de référence parmi les rives (16) externe et interne dudit fer à cheval sélectionné.

9. Procédé selon la revendication 7 ou 8, **caractérisé en ce qu'**ayant déterminé le pourtour extérieur de la paroi du sabot à ferrer, on ajuste les dimensions et/ou la forme dudit fer à cheval, à l'étape b), de sorte que la rive (16) externe dudit fer à cheval sélectionné soit confondue ou sensiblement confondue avec ledit pourtour.

10. Procédé selon l'une quelconque des revendications 1 à 9, **caractérisé en ce qu'**ayant déterminé une ligne de référence dudit fer à cheval, on détermine un centre théorique du sabot à ferrer et on ajoute un ou plusieurs éléments (17) de finition sur ledit fer à cheval sélectionné, la position de chaque élément (17) de finition étant calculée par rapport à ladite ligne de référence et ledit centre ainsi déterminés.

11. Procédé de fabrication d'un fer à cheval sur mesure, ledit procédé comprenant le procédé selon l'une des revendications 1 à 10, **caractérisé en ce qu'**on réalise les étapes supplémentaires suivantes :
- transmission des données définitives du fer à cheval ainsi sélectionné à un système de CFAO,
- génération dans le système de CFAO d'un fer à cheval en trois dimensions correspondant au fer à cheval sélectionné; ledit fer à cheval ainsi généré étant adapté et ajusté en trois dimensions dans le système de CFAO en fonction de la taille et/ou de la forme déterminée, ledit fer à cheval comportant éventuellement au moins un élément (17) de finition, ledit fer à cheval ainsi généré définissant un ensemble de paramètres dudit fer à cheval en trois dimensions dans le système de CFAO,
- usinage d'un fer à cheval à partir d'un bloc de matière en fonction de l'ensemble de paramètres du fer à cheval en trois dimensions ainsi généré dans le système de CFAO pour ledit fer sélectionné ou impression tridimensionnelle dudit fer à partir de l'ensemble de paramètres du fer à cheval en trois dimensions ainsi généré dans le système de CFAO pour ledit fer sélectionné.

12. Procédé selon l'une des revendications 1 à 11, **caractérisé en ce qu'**à l'étape a), l'image dudit fer à cheval étant choisie dans une bibliothèque de données, ladite bibliothèque de données comporte également un ensemble de données comprenant au moins un identifiant dudit cheval, un identifiant dudit sabot à ferrer et des paramètres définitifs d'un ou plusieurs fers à cheval réalisés antérieurement pour ledit sabot à ferrer et **en ce qu'**on génère après identification dudit cheval et dudit sabot à ferrer, un sous-ensemble de paramètres déterminant la forme et/ou le nombre d'au moins certains éléments de finition pour ledit fer à cheval, lesdits paramètres étant déterminés à partir des paramètres correspondants choisis pour des fers sur mesure réalisés antérieurement.

13. Programme d'ordinateur comprenant des instructions adaptées à la mise en œuvre de chacune des étapes du procédé selon l'une quelconque des revendications 1 et 7 à 12, lorsque ledit programme est exécuté sur un ordinateur.

14. Support d'enregistrement sur lequel est stocké le programme d'ordinateur selon la revendication 13.

15. Station de travail comprenant une interface utilisateur graphique, un processeur et une unité de stockage informatique contenant une bibliothèque de données comprenant des enregistrements numérisés appartenant à un cheval à ferrer ainsi que des données sur différents fers à cheval et leurs éléments de finition, **caractérisée en ce que** lesdits enregistrements numérisés comprennent une ou plusieurs images (14) d'un sabot à ferrer et ladite station (11) de travail comprend un ensemble d'instructions logicielles constituant des outils d'interface graphique/utilisateur grâce auxquelles ledit utilisateur peut générer un fer à cheval sur mesure pour ledit sabot à ferrer, lesdites instructions logicielles appartenant audit programme d'ordinateur selon la revendication 13.

## Patentansprüche

1. Verfahren zur Definition der Parameter eines maßgefertigten Hufeisens für seine Herstellung, **dadurch gekennzeichnet, dass** nach Erhalten eines digitalen Bildes (14) mindestens eines Teils eines zu beschlagenden Hufes die folgenden Schritte durchgeführt werden:
a) Überlagern eines Bildes eines Hufeisens (15) und des digitalen Bildes (14), um das Bild des Hufeisens in das digitale Bild (14) einzufügen,
b) Anpassen der Abmessungen und/oder der Form des Hufeisens in dem Bild an den zu beschlagenden Huf, und
c) Einstellen der Abmessungen und/oder der Form des Hufeisens in dem Bild unter Berücksichtigung von mindestens physischen Parametern des Pferdes und/oder der für dieses Pferd vorgesehenen Aktivität und des eventuellen Vorhandenseins von mindestens einer Pathologie, wie einer Entzündungszone und/oder mindestens einer Zone mit verminderter Blutzirkulation, des Fußes des Pferdes, dessen Huf dazu bestimmt ist, das Eisen zu empfangen.

2. Verfahren nach Anspruch 1, **dadurch gekennzeichnet, dass** das digitale Bild (14) im sichtbaren oder Infrarotbereich oder durch Strahlung von elektromagnetischen Wellen oder Teilchen erhalten wird.

3. Verfahren nach Anspruch 1, **dadurch gekennzeichnet, dass** vor dem Schritt a) das digitale Bild (14) durch Überlagerung von mindestens zwei digitalen Bildern erhalten wird, um den Benutzer bei der Definition des Hufeisens zu unterstützen.

4. Verfahren nach einem der Ansprüche 1 bis 3, **dadurch gekennzeichnet, dass** mindestens ein zweites digitales Bild (14) getrennt von dem digitalen Bild (14) von mindestens einem Teil eines zu beschlagenden Hufes angezeigt wird, wobei das zweite digitale Bild (14) ein Bild eines anderen anatomischen Teils des Pferdes ist, um den Benutzer bei der Definition des Hufeisens zu unterstützen.

5. Verfahren nach Anspruch 4, **dadurch gekennzeichnet, dass** mindestens eines der digitalen Bilder ein Teil eines eingefrorenen Videobildes ist.

6. Verfahren nach einem der Ansprüche 1 bis 5, **dadurch gekennzeichnet, dass** vor dem Schritt c) eine Übertragung von mindestens dem Bild, das aus der Überlagerung der Bilder in dem Schritt a) resultiert, mittels eines Internet-Netzwerks oder eines Kommunikationsnetzwerks durchgeführt wird.

7. Verfahren nach einem der Ansprüche 1 bis 6, **dadurch gekennzeichnet, dass** ein zusätzlicher Schritt durchgeführt wird, wobei der Schritt darin besteht, eine Bezugslinie des Hufeisens zu bestimmen, von der ausgehend die Position mindestens eines Endbearbeitungselementes (17) des Hufeisens bestimmt wird.

8. Verfahren nach Anspruch 7, **dadurch gekennzeichnet, dass** die Bezugslinie aus den äußeren und inneren Rändern (16) des ausgewählten Hufeisens ausgewählt wird.

9. Verfahren nach Anspruch 7 oder 8, **dadurch gekennzeichnet, dass**, nachdem der Außenumfang der Wand des zu beschlagenden Hufes bestimmt wurde, die Abmessungen und/oder die Form des Hufeisens in Schritt b) derart angepasst werden, dass der äußere Rand (16) des ausgewählten Hufeisens mit dem Umfang zusammenfällt oder im Wesentlichen zusammenfällt.

10. Verfahren nach einem der Ansprüche 1 bis 9, **dadurch gekennzeichnet, dass**, nachdem eine Bezugslinie des Hufeisens bestimmt wurde, ein theoretisches Zentrum des zu beschlagenden Hufes bestimmt wird und ein oder mehrere Endbearbeitungselemente (17) an dem ausgewählten Hufeisen hinzugefügt werden, wobei die Position jedes Endbearbeitungselements (17) in Bezug auf die Bezugslinie und das Zentrum berechnet wird, die so bestimmt wurden.

11. Verfahren zur Herstellung eines maßgefertigten Hufeisens, wobei das Verfahren das Verfahren nach einem der Ansprüche 1 bis 10 umfasst, **dadurch gekennzeichnet, dass** die folgenden zusätzlichen Schritte durchgeführt werden:
- Übertragung der endgültigen Daten des so ausgewählten Hufeisens an ein CAD/CAM-System,
- Generierung eines Hufeisens in drei Dimensionen im CAD/CAM-System, das dem ausgewählten Hufeisen entspricht; wobei das so erzeugte Hufeisen in dem CAD/CAM-System in Abhängigkeit der bestimmten Größe und/oder Form in drei Dimensionen angepasst und eingestellt wird, wobei das Hufeisen gegebenenfalls mindestens ein Endbearbeitungselement (17) umfasst, wobei das so erzeugte Hufeisen einen Satz von Parametern des Hufeisens in drei Dimensionen in dem CAD/CAM-System definiert,
- Fertigung eines Hufeisens ausgehend von einem Materialblock in Abhängigkeit des Satzes von Parametern des Hufeisens in drei Dimensionen, der so in dem CAD/CAM-System für das ausgewählte Eisen erzeugt wurde, oder dreidimensionales Drucken des Eisens ausgehend von dem Satz von Parametern des Hufeisens in drei Dimensionen, der so in dem CAD/CAM-System für das ausgewählte Eisen erzeugt wurde.

12. Verfahren nach einem der Ansprüche 1 bis 11, **dadurch gekennzeichnet, dass** in dem Schritt a) das Bild des Hufeisens aus einer Datenbibliothek ausgewählt wird, wobei die Datenbibliothek ferner einen Datensatz umfasst, der mindestens eine Kennung des Pferdes, eine Kennung des zu beschlagenden Hufes und endgültige Parameter eines oder mehrerer zuvor für den zu beschlagenden Huf hergestellter Hufeisen umfasst, und dass nach Identifizierung des Pferdes und des zu beschlagenden Hufes einen Untersatz von Parametern erzeugt wird, der die Form und/oder die Anzahl mindestens einiger Endbearbeitungselemente für das Hufeisen bestimmt, wobei die Parameter ausgehend von den entsprechenden Parametern bestimmt werden, die für zuvor hergestellte maßgefertigte Eisen ausgewählt wurden.

13. Computerprogramm umfassend Anweisungen, die angepasst sind zur Umsetzung jedes der Schritte des Verfahrens nach einem der Ansprüche 1 und 7 bis 12, wenn das Programm auf einem Computer ausgeführt wird.

14. Aufzeichnungsmedium, auf dem das Computerprogramm nach Anspruch 13 gespeichert ist.

15. Arbeitsstation umfassend eine graphische Benutzeroberfläche, einen Prozessor und eine Computerspeichereinheit, die eine Datenbibliothek enthält, die digitalisierte Aufzeichnungen umfasst, die zu einem zu beschlagenden Pferd gehören, sowie Daten über verschiedene Hufeisen und deren Endbearbeitungselemente, **dadurch gekennzeichnet, dass** die digitalisierten Aufzeichnungen ein oder mehrere Bilder (14) eines zu beschlagenden Hufes umfassen und die Arbeitsstation (11) einen Satz von Softwarebefehlen umfasst, die Werkzeuge der graphischen/ Benutzeroberfläche darstellen, dank derer der Benutzer ein maßgefertigtes Hufeisen für den zu beschlagenden Huf erzeugen kann, wobei die Softwarebefehle zu dem Computerprogramm nach Anspruch 13 gehören.

## Claims

1. A method for defining the parameters of a custom horseshoe for its manufacture, **characterised in that** having obtained a digital image (14) of at least part of a hoof to be shoed, the following steps are carried out:
a) superimposing an image of a horseshoe (15) and said digital image (14) to insert the image of said horseshoe into said digital image (14),
b) adapting the dimensions and/or shape of said horseshoe in said image to said hoof to be shoed, and
c) adjusting the dimensions and/or shape of said horseshoe in said image taking into account at least physical parameters of the horse and/or the activity considered for this horse and the possible existence of at least one pathology such as an area of inflammation and/or at least one area of reduced blood circulation, of the foot of the horse whose hoof is intended to receive said shoe.

2. The method according to claim 1, **characterised in that** said digital image (14) is obtained in the visible or infrared range or by radiation of electromagnetic waves or particles.

3. The method according to claim 1, **characterised in that** prior to step a), said digital image (14) is obtained by superimposing at least two digital images so as to assist the user in defining said horseshoe.

4. The method according to any one of claims 1 to 3, **characterised in that** at least one second digital image (14) is displayed separately from said digital image (14) of at least one part of a hoof to be shoed, said second digital image (14) being an image of another anatomical part of said horse to assist the user in defining said horseshoe.

5. The method according to claim 4, **characterised in that** at least one of said digital images is a part of a frozen video frame.

6. The method according to any one of claims 1 to 5, **characterised in that** prior to step c), a transmission of at least the image resulting from the superposition of said images in step a), is carried out by means of an internet network or a communications network.

7. The method according to any one of claims 1 to 6, **characterised in that** an additional step is carried out, said step consisting in determining a reference line of said horseshoe from which the position of at least one finishing element (17) of said horseshoe will be determined.

8. The method according to claim 7, **characterised in that** said reference line is chosen from the external and internal rims (16) of said selected horseshoe.

9. The method according to claim 7 or 8, **characterised in that** having determined the external perimeter of the wall of the hoof to be shoed, the dimensions and/or the shape of said horseshoe are adjusted, in step b), so that the external rim (16) of said selected horseshoe coincides or substantially coincides with said perimeter.

10. The method according to any one of claims 1 to 9, **characterised in that** having determined a reference line of said horseshoe, a theoretical centre of the hoof to be shoed is determined and one or more finishing elements (17) are added to said selected horseshoe, the position of each finishing element (17) being calculated relative to said reference line and said centre thus determined.

11. A method for manufacturing a custom horseshoe, said method comprising the method according to one of claims 1 to 10, **characterised in that** the following additional steps are carried out:
- transmitting the final data of the horseshoe thus selected to a CAD/CAM system,
- generating in the CAD/CAM system a three-dimensional horseshoe corresponding to the selected horseshoe; said horseshoe thus generated being adapted and adjusted in three dimensions in the CAD/CAM system according to the determined size and/or shape, said horseshoe possibly including at least one finishing element (17), said horseshoe thus generated defining a set of parameters of said horseshoe in three dimensions in the CAD/CAM system,
- machining a horseshoe from a block of material based on the set of parameters of the three-dimensional horseshoe thus generated in the CAD/CAM system for said selected horse or three-dimensional printing of said horse from the set of parameters of the three-dimensional horseshoe thus generated in the CAD/CAM system for said selected horse.

12. The method according to one of claims 1 to 11, **characterised in that** in step a), the image of said horseshoe being chosen from a data library, said data library also includes a set of data comprising at least one identifier of said horse, one identifier of said hoof to be shoed and final parameters of one or more horseshoes previously made for said hoof to be shoed and **in that** after identification of said horse and said hoof to be shoed, a subset of parameters determining the shape and/or the number of at least certain finishing elements for said horseshoe is generated, said parameters being determined from the corresponding parameters chosen for custom shoes previously made.

13. A computer program comprising instructions adapted to the implementation of each of the steps of the method according to any one of claims 1 and 7 to 12, when said program is executed on a computer.

14. A recording medium on which the computer program according to claim 13 is stored.

15. A workstation comprising a graphical user interface, a processor and a computer storage unit containing a data library comprising digitised records belonging to a horse to be shoed as well as data on different horseshoes and their finishing elements, **characterised in that** said digitised records comprise one or more images (14) of a hoof to be shoed and said workstation (11) comprises a set of software instructions constituting graphical/user interface tools by means of which said user can generate a custom horseshoe for said hoof to be shoed, said software instructions belonging to said computer program according to claim 13.
